# EUROPÄISCHE PATENTSCHRIFT

(11) **EP 0 872 508 B1**
(45) Veröffentlichungstag und Bekanntmachung des Hinweises auf die Patenterteilung: **16.08.2000**
(21) Anmeldenummer: 98105939.7
(22) Anmeldetag: 01.04.1998
(51) Int. Cl.: C08G 69/20, C08G 69/18

(54) **Verfahren zur Herstellung eines lagerstabilen Flüssigsystems zur Durchführung der anionischen Lactam-Polymerisation**
Process for preparing a storage stable liquid system for the anionic lactam polymerisetion
Procédé pour la préparation de systèmes liquides, stables au stockage, pour la polymérisation anionique de lactames

(30) Priorität: 15.04.1997 DE 19715679
(43) Veröffentlichungstag der Anmeldung: 21.10.1998
(73) Patentinhaber: EMS-INVENTA AG, 8002 Zürich (CH)
(72) Erfinder: Schmid, Eduard, Dr., 7402 Bonaduz (CH); Eder, Roman, 70794 Filderstadt (DE); Laudonia, Ivano, 7430 Thusis (CH)
(74) Vertreter: Hotz, Klaus, Dipl.-El.-Ing./ETH

(56) Entgegenhaltungen:
- EP-A- 0 438 762
- EP-A- 0 786 482
- EP-A- 0 786 483
- EP-A- 0 786 484
- EP-A- 0 786 485
- EP-A- 0 786 486
- DE-A- 1 495 132
- DE-A- 1 495 848
- DE-A- 1 520 605
- DE-A- 2 230 732
- US-A- 3 575 938
- ULLMANN'S ENCYCLOPEDIA OF INDUSTRIAL CHEMISTRY, Bd. A27, 1996, Seite 356 XP002067281

## Beschreibung

Die Erfindung betrifft ein Verfahren zur Herstellung eines bei Raumtemperatur lagerstabilen Flüssigsystems, das direkt die aktivierte anionische Lactampolymerisation auslöst und ablaufen lässt.

Die aktivierte, anionische Lactampolymerisation wird im allgemeinen durch getrennte Zugabe von Katalysator und Aktivator zur Lactamschmelze ausgelöst, wobei sich für viele Anwendungen das sogenannte 2-Topfverfahren durchgesetzt hat. Dabei werden volumengleiche Schmelzeanteile bereitgestellt, die einerseits Katalysator und andererseits Aktivator gelöst enthalten. Diese Schmelzen werden zur beschleunigten Auslösung der Polymerisation zusammengeführt. Das Verfahren benötigt somit zwei getrennte Schmelzetanks für Lactam, das bei erhöhter Temperatur aktive Substanzen, wie Katalysator und Aktivator, gelöst enthält. Die Schmelzen werden dadurch in ihrer Lagerfähigkeit stark beeinträchtigt.

Die Polymerisation von Lactam könnte stark vereinfacht und umfassend angewendet werden, wenn auf Bereitstellung von je in der Lagerstabilität beeinträchtigter Lactamschmelze, einerseits mit gelöstem Katalysator und anderseits mit gelöstem Aktivator, verzichtet werden könnte. Dies gilt insbesondere für Lactam-12, das erst oberhalb von 150°C flüssig ist.

Erschwerend ist ferner, dass je Katalysator und Aktivator getrennt der Lactamschmelze zugefügt werden müssen. Dabei ist der Katalysator ein Feststoff und auch viele Aktivatoren sind Feststoffe, so dass der Polymerisation stets getrennte oder stufenweise ablaufende Löseprozesse vorangehen müssen, während derer auch bereits die Polymerisation des Lactams einsetzen kann. Dies gilt insbesondere für Lactam-12 mit seinem hohen Schmelzpunkt und den Eintrag von Katalysator in die Lactamschmelze.

Wird Lactam-6 enthaltender Katalysator für die Polymerisation anderer Lactame verwendet, so entstehen, wenn auch in geringem Anteil, Copolyamide.

Da käufliche Katalysatoren für die Lactampolymerisation beschränkt lagerstabile Feststoffe sind, die bei der Anwendung einen Löseprozess im zuvor geschmolzenen Lactam erfordern, wurden komplizierte Lösemittelsysteme entwickelt um eine wenigstens über eine beschränkte Zeit verwendungsfähige, wenig verschlackende, bevorzugt bei Raumtemperatur flüssige Katalysatorlösung bereitzustellen. Beispiele dafür sind: ***DE-A-22 30 732*** und ***EP-A-0 438 762****.* Auch über Bereitstellung von Katalysatorlösungen bleibt der Hauptnachteil des Verfahrens bestehen, dass nämlich für die rasch und gezielt ablaufende aktivierte, anionische Lactampolymerisation je getrennt Aktivator und Katalysator der Lactamschmelze zugefügt werden müssen.

Es entspricht somit einem ausgewiesenen Bedürfnis die aktivierte, anionische Lactampolymerisation wesentlich zu vereinfachen, in ihrer technischen Durchführbarkeit sicherer zu gestalten und mit weniger Verfahrensschritten durchzuführen.

Insbesondere die Bereitstellung eines lagerstabilen, flüssigen Systems, das nur wenig oder kein freies Lactam enthält, direkt die aktivierte anionische Lactampolymerisation auslöst und in diskontinuierlichen und kontinuierlichen Verfahren ablaufen lässt, würde einen sehr wesentlichen technischen Fortschritt bedeuten.

Gefordert ist somit ein Verfahren zur Herstellung eines Flüssigsystems zur Auslösung und Durchführung der Lactampolymerisation, durch welches sich ein Flüssigsystem mit wenigen Verfahrensschritten herstellen lässt, insbesondere keine oder nur geringe Anteile an freiem Lactam enthält und das sich durch hohe Fliessfähigkeit und gute Lagerstabilität auszeichnet, das heisst, bei Lagerung fliessfähig und aktiv bleibt und das bereits bei Verwendung nur eines geringen Volumenanteils als Zusatz zu einer Lactamschmelze die Lactampolymerisation auslöst und bei geeigneter Temperaturführung in wenigen Minuten ablaufen lässt und so für kontinuierliche und diskontinuierliche Verfahren geeignet ist.

Diese Aufgabe wird gelöst durch folgendes Verfahren zur Herstellung eines lagerstabilen Flüssigsystems mit einem gleichzeitig die Wirkung von Katalysator und Aktivator ausübenden gelösten Reaktionsprodukt zur Durchführung der Lactampolymerisation:
Verfahren zur Herstellung eines katalytisch wirksamen Flüssigsystems zur Durchführung der Lactam- Polymerisation, welches bei Raumtemperatur lagerstabil und flüssig ist und in welchem
unter Inertgas und Feuchtigkeitsausschluss
in mindestens einem flüssigen, polaren, aprotischen Solvatisierungsmittel (S) ein gleichzeitig die Wirkung von Katalysator und Aktivator ausübendes Reaktionsprodukt hergestellt wird durch die Schritte:
a) Lösen mindestens eines zur Lactamatbildung befähigten Lactams (L) im Solvatisierungsmittel (S),
b) Zugabe von mindestens einer starken Base (B) und Umsetzung des mindestens einen Lactams zum Lactamat,
c) Zugabe von mindestens einem Aktivator (A) und dessen Umsetzung mit dem Lactamat,
d) Abkühlung der Lösung des Reaktionsproduktes auf Raumtemperatur, wobei das Lactam (L) und die Base (B) in stöchiometrischen Anteilen oder mit einem solchen Lactamüberschuss eingesetzt werden, dass weniger als 400 Gew.-Teile freies Lactam bezogen auf freies Lactamat vorliegen.

Die Herstellung erfolgt dabei in mindestens einer solvatisierend wirkenden aprotischen Verbindung, dem Solvatisierungsmittel S, in welchem mindestens ein Lactam L gelöst ist, das mit einer starken Base B zu Lactamat, dem Katalysator K, umgesetzt wird. Nachfolgend wird ein Aktivator A zugesetzt und mit dem Lactamat umgesetzt. Das so gebildete Flüssigsystem wird sodann abgekühlt. Dabei werden vorzugsweise Lactam L, Base B und Aktivator A in stöchiometrisch äquivalentem Verhältnis eingesetzt. Der Überschuss an Lactam L im Verhältnis zu Base B soll dabei nicht mehr als 10 Mol-% betragen.

Weitere Zusatzstoffe können dabei in einer beliebigen Verfahrensstufe zugesetzt werden.

Der erfinderische Gedanke des Verfahrens zur Herstellung des lagerstabilen Flüssigsystems liegt somit in der direkten Herstellung des aus Katalysator und Aktivator bestehenden Reaktionsproduktes im aprotischen Solvatisierungsmittel, wobei der freie Lactamüberschuss gezielt begrenzt, insbesondere vermieden wird, während nach dem Stand der Technik, auch bei der Herstellung von Flüssigsystemen, der zuzufügende Feststoffkatalysator in einem Lactamüberschuss, der in der Praxis im allgemeinen 400 Gew.% beträgt, vorliegt.

Bei der Verwendung des erfindungsgemässen Flüssigsystems zur Herstellung von Polylactam wird somit die Bildung von unerwünschtem Copolyamid vermieden.

Solvatisierungsmittel sind organische Verbindungen mit aliphatischen, cycloaliphatischen und aromatischen Strukturelementen, Heteroatomen und Heterogruppen, wie z.B.:
-O-, -CO-, - SO₂-, -CONR-, -COO-, -NR·CO·O-, -NO-,
-RN·CO·NR -, Phenoläther, - NR -, P(OR)₃, und PO(OR)₃,
welche solvatisierend wirken.

Die Striche, an den Strukturelementen bedeuten dabei eine Bindung zu einem Rest, der nicht H ist und der keine Kondensationsreaktion unter Wasserabspaltung eingehen kann.

R ist ein Rest, der verschieden von Wasserstoff ist, insbesondere ein Alkylrest.

Das Solvatisierungsmittel kann mehrere der aufgeführten Strukturelemente enthalten. Die aufgeführten Strukturelemente sind als beispielhaft zu betrachten.

Das Solvatisierungsmittel S ist bevorzugt eine aliphatische Verbindung.

Bevorzugte Vertreter entsprechen der allgemeinen Formel I 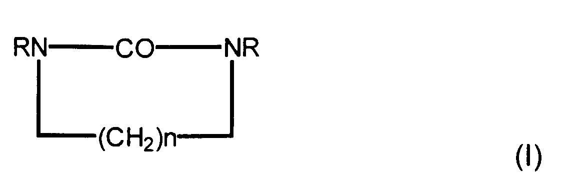 in welcher R ein Alkylrest, insbesondere ein Methylrest und n = 2 und 3 ist.

Weitere Vertreter sind Tetralkylharnstoffe, wie Tetramethylharnstoff, Tetraethylharnstoff und Tetrabutylharnstoff, oder N-alkylierte Carbonsäureamide, wie z.B. Dialkylacetamid oder Dibutylformamid oder cyclische, N-alkylierte Carbonsäureamide, wie z.B. N-Alkylpyrrolidon und N-Alkyl-caprolactam mit bevorzugt einem Alkylrest mit 1 - 8 C-Atomen, wie z.B. N-Butyl-2-Pyrrolidon und insbesondere N-Methylpyrrolidon und N-Methylcaprolactam.

In allen Fällen können die Alkylreste auch Heteroatome enthalten, wie z.B. N-(3-Methyloxypropyl)-2-Pyrrolidon.

Weitere Solvatisierungsmittel S sind flüssige, veretherte Polyole, z.B. der Grundstruktur H₃C-O-(CH₂-CH₂-O)ₙ-CH₃ mit einem Molekulargewicht bis ca. 1500 sowie veresterte Polyglykole, zum Beispiel Di- und Triethylenglykoldiacetat oder flüssige Phthalsäureester.

Das Solvatisierungsmittel S benötigt die solvatisierenden Strukturelemente zum Lösen des Lactams und, vorzugsweise bei erhöhter oder vorteilhafterweise auch bei Raumtemperatur, des gebildeten Lactamats. Es muss genügend thermostabil sein, um als Reaktionsmedium für die Lactamatbildung und den späteren Umsatz mit dem Aktivator zu dienen, es muss in vorteilhaften Verfahrensvarianten genügend hoch siedend sein, um bei der späteren Verwendung zur Auslösung der Lactampolymerisation in der Lactamschmelze keine Blasenbildung zu bewirken. Vorteilhaft werden Solvatisierungsmittel mit Siedepunkten zwischen 80 und 300°C, bevorzugt von mindestens 200°C, eingesetzt. Schliesslich muss es das gebildete Reaktionsprodukt aus Metallactamat und Aktivator bei Raumtemperatur lösen.

Das Solvatisierungsmittel S oder andere Lösungsmittel können ausserdem zum Lösen oder Suspendieren der Base B oder des Aktivators A vor deren Zugabe dienen.
Sowohl die Lösungs- und Suspensionsmittel als auch die Neutralisationsprodukte der Base B können aus dem Verfahren durch Vakuum und/oder Wärmeeinwirkung wieder entfernt werden.

Eine Verfahrensalternative, insbesondere für einen kontinuierlichen Prozess, ist ein Solvatisierungsmittel mit tiefem Siedepunkt, der etwa im Bereich zwischen 80 und 160°C liegt und der es erlaubt das Solvatisierungsmittel nach Zugabe des Flüssigsystems zur Lactamschmelze kontinuierlich zu entfernen.

In weiteren bevorzugten Varianten ist das Solvatisierungsmittel ein System aus mehreren, zum Beispiel tiefsiedenden und hochsiedenden Komponenten oder solchen mit unterschiedlichen anwendungsspezifischen Eigenschaften. Neben einem cyclischen Harnstoffderivat kann beispielsweise ein solches System ein sterisch gehindertes Phenol, ein Fettalkyloxazolin und/oder einen Phthalsäureester mitenthalten.
Im fertigen Polyamid können solche zusätzlichen Komponenten z.B. die Stabilität. gegen die Einwirkung von Hitze, Licht und/oder Oxidation oder die Entformung des Fertigteils verbessern.
Dabei können zusätzliche Komponenten, die Feststoffe sind, vor Beginn der Umsetzung in der Hauptkomponente des Solvatisierungsmittels gelöst werden.
Wesentlich bei ihrer Auswahl ist, dass sie bei der Lactamatbildung und bei der Umsetzung mit dem Aktivator keine unerwünschten Nebenreaktionen eingehen und die spätere Lactampolymerisation nicht oder nur unwesentlich beeinträchtigen.

In vielen Fällen, kann es auch vorteilhaft sein eine Mischung verschieden aktiver Solvatisierungsmittel, die miteinander mischbar sind, zu verwenden. So eignen sich z.B. Mischungen aus cyclischen Harnstoffen und/oder Säureamiden wie z.B. 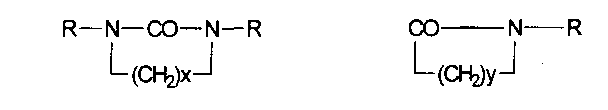 mit R z.B. Methyl und x sowie y so gewählt, dass ein 5-, 6- oder 7-gliedriger Ring entsteht.

Dabei bewirkt die Harnstoffverbindung bzw. das Amid bevorzugt die Solvatisierung des Anlagerungsproduktes des Lactamates an die Verbindung A (Carbodiimid bzw. Isocyanat) und der spezielle Polyäther dient der weiteren Verflüssigung des Systems und kann z.B. mithelfen den Modul des Polylactams über Weichmachung zu erniedrigen.
Die für die Lactamatbildung eingesetzten Lactame (L) sind vorteilhaft solche mit 5 bis 13 Ringgliedern, wie z.B. Butyrolactam, Valerolactam, Caprolactam, Oenantholactam und Laurinlactam. Dabei sind Lactame mit 5 - 7 Ringgliedern und besonders Caprolactam bevorzugt.

Die für die Lactamatbilung eingesetzten starken Basen B weisen bevorzugt eine höhere Basizität auf, als das Lactamatanion, dessen Bildung sie bewirken.

Bevorzugt eingesetzte Basen B haben ein Alkali-, Erdalkali- oder Tetraalkylammonium-Kation und ein Alkoholat, Amid, Hydrid, oder ein Alkylat als Anion oder sind Grignardverbindungen.

Beispiele sind Alkali- und Erdalkalialkoholate, besonders Methylate und Ethylate, wie z.B. Natriummethylat und -ethylat oder Alkoholate des Lithium, Kalium oder Magnesium oder auch Tetralkylammoniumalkoholat, Metallhydride, wie z.B. Natriumhydrid, Metallalkyle wie z.B. Butyllithium, Amide, wie z.B. Natriumamid, oder auch Alkali- und Erdalkalimetalle, die z.B. mittels Eisen(II)-Ionen aktiviert sein können.

Die Basen B werden in speziellen Verfahrensvarianten als Lösung oder Suspension, beispielsweise im Solvatisierungsmittel, oder als feinteilige Feststoffe zugegeben.
Bevorzugte Aktivatoren sind Carbodiimide, Polycarbodiimide oder Monoisocyanate und Diisocyanate, welche eine aliphatische, cycloaliphatische, aromatische oder aliphatischaromatische Grundstruktur haben.Bevorzugt sind Grundstrukturen des Toluol, Isophoron, Xylol, Diphenylmethan, Hexan oder Cyclohexan.
Beispiele sind flüssige Isocyanate, wie z.B. Toluylendiisocyanat und Hexamethylendiisocyanat, und besonders auch mit Hydroxyfettalkyloxazolin oder mit Lactam verkappte Monoisocyanate und Diisocyanate oder aber Carbodiimide und Polycarbodiimide.
Geeignete Carbodiimide sind z.B. N,N'-Dicyclohexylcarbodiimid, N,N'-Diisopropylcarbodiimid, N,N'-Di-(o-toluyl)-carbodiimid, , 2,2',6,6'-Tetraisopropyldiphenylcarbodiimid und Poly-(2,2-diisopropyl)-p-phenylencarbodiimid.

Auch die Aktivatoren können vorteilhaft im Solvatisierungsmittel gelöst sein.

Laktamat und Aktivator A werden mindestens im stöchiometrischen Verhältnis ihrer funktionellen Gruppen verwendet.
Bevorzugt werden aber pro Mol Lactamat 0,4-1 Mol des Aktivators eingesetzt.
Der Überschuss an Lactamat kann dazu dienen, Spuren an Restfeuchte zu eliminieren.

Dem Flüssigsystem können vorteilhaft auch eigenschafts- und anwendungsbedingte Zusatzstoffe, welche die Polymerisation nicht oder nur unwesentlich beeinträchtigen, in einem beliebigen Schritt während der Herstellung zugefügt werden. Es sind dies z.B. Entformungsmittel, Entschäumer, Hitze-, Licht-und/oder Oxidations-Stabilisatoren, Nukleierungsmittel, Tracer, Optische Aufheller, Weichmacher, Schlagzähmittel und Farbmittel.

Die Herstellung des Flüssigsystems erfolgt erfindungsgemäss mehrstufig direkt im Solvatisierungsmittel, ohne dass das Lactamat als Feststoff in einer Zwischenstufe abgetrennt werden muss. Je nach den gewählten Ausgangsstoffen lässt sich das Verfahren auf vielfältige Weise durchführen.

Für die Stufe der Lactamatbildung in Lösung, kann beispielsweise wie folgt verfahren werden:
Zu beachten ist dabei, dass alle Komponenten weitgehend wasserfrei sein müssen. Zudem ist Arbeiten unter Schutzgas notwendig.

In einem rühr- und beheizbaren Reaktionsgefäss wird das Solvatisierungsmittel vorgelegt und bei einer geeigneten Temperatur darin das Lactam gelöst. Unter Rühren wird anschliessend die Base langsam zugefügt. Wird dazu Natriummethylat, gelöst in Methanol, verwendet, so wird der eingebrachte und der entstehende Alkohol vorteilhafterweise kontinuierlich unter Wärme- und Vakuumeinwirkung abgezogen, wobei nach Beendigung der Zugabe Vakuum- und Wärmeeinwirkung unter Rühren noch während einer geeigneten Zeit fortgesetzt wird. Restmengen an Alkohol können auch mit Hilfe eines Schleppmittels wie z.B. Tetrahydrofuran und Vakuumeinwirkung entfernt werden. Besonders starke Basen, wie z.B. Metallhydride (z.B. NaH) oder Butyllithium oder auch Grignardverbindungen, wie z.B. Ethyl- oder Butylmagnesiumchlorid oder auch Natriumamid werden oft als Lösung oder in einem Oxidationsschutzmittel oder auch in Tetrahydrofuran oder Diäthyläther angewendet.

Dabei sind die Reaktionsprodukte bei Raumtemperatur flüchtig, und die verwendeten, starken Basen reagieren mit dem gelösten Lactam meist recht heftig und sie werden der gerührten Reaktionsmischung vorteilhafterweise portionsweise zugefügt. Wird flüssiges Oxidationsschutzmittel verwendet, so wird es anschliessend unter Vakuum entfernt. Alternativ kann man auch so vorgehen, dass man die Base z.B. im Solvatisierungsmittel löst oder darin suspendiert und danach unter Rühren das Lactam zufügt und Reaktionsprodukte unter Vakuum und notfalls auch mit Hilfe eines Schleppmittels abzieht. Beispielsweise kann festes Magnesiumethylat im Solvatisierungsmittel, Dimethylpropylenharnstoff, suspendiert und anschliessend flüssiges Lactam, wie z.B. Butyro-, Valero- oder Oenantholactam kontinuierlich zugegeben werden, während unter Vakuum und gegebenenfalls unter Wärmeeinwirkung kontinuierlich der enstehende Alkohol entfernt wird, wobei auch ein Schleppmittel, wie z.B. Tetrahydrofuran mitverwendet werden kann. Schlepp- und/oder auch Solvatisierungsmittel kann auch dem Lactam zugefügt sein, wobei es vorteilhafterweise den Schmelzpunkt des Lactams herabsetzt und damit dessen Zudosierung erleichtert.

Ein Beispiel ist Lactam-6, das bei Zugabe von nur wenig Dimethylpropylenharnstoff bei Raumtemperatur flüssig ist.

Enthält der Aktivator bereits angelagertes Lactam, wie beispielsweise bei der Verkappung von Isocyanat mit Caprolactam, kann man auch das verkappte Isocyanat direkt im Solvatisierungsmittel lösen und danach die Base in stöchiometrischem Anteil bezogen auf die verkappten Isocyanatgruppen zufügen.

Bei der Vielzahl der Verfahrensvarianten sind Temperaturführung, Reihenfolge und Art der Zugaben, Vakuum und Auswahl des Schleppmittels den verwendeten Verbindungen anzupassen. Dabei laufen die einzelnen Reaktionsschritte vorzugsweise bei Temperaturen zwischen 70 und 130°C ab.

Bevorzugt werden beispielsweise Solvatisierungsmittel verwendet, deren Siedepunkt zwischen 80 und 300°C liegt. Oft ist es vorteilhaft, ein Solvatisierungsmittel mit einem Siedepunkt von mindestens 200° C, vorteilhafterweise von mindestens 230°C und insbesondere von 250°C und mehr zu verwenden und die Base so zu wählen, dass sie nach Neutralisation leicht aus der Reaktionsmischung entfernt werden kann.

In einer vorteilhaften Verfahrensvariante werden Gemische aus mindestens einem hochsiedenden und mindestens einem tiefsiedenden Solvatisierungsmittel S eingesetzt. Ausgewählte tiefsiedende Sovatisierungsmittel haben Siedepunkte zwischen 80 und 160°C, ausgewählte hochsiedende sieden bei mindestens 200 °C.

Von besonderem Vorteil im erfindungsgemässen Verfahren zur Herstellung eines Flüssigsystems zur direkten Auslösung der aktivierten anionischen Lactampolymerisation ist, dass stöchiometrisch bzw. mit einem geringen stöchiometrischen Überschuss an Lactam, der vorteilhaft zwischen 1 und 10 Mol.% liegt, gearbeitet werden kann, so dass das resultierende Flüssigsystem praktisch kein freies Lactam enthält.

Nach dem Stand der Technik wird hingegen beispielsweise handelsübliches Natriumlactamat eingesetzt, das aus 4 Teilen Lactam-6 und nur einem Teil Lactamat besteht, was einen Überschuss von 400% bezogen auf das Lactam bedeutet.

Weiter ist von Vorteil, dass der Katalysator als Zwischenprodukt nicht isoliert werden muss, sondern der Aktivator direkt der frisch hergestellten Katalysatorlösung zugesetzt werden kann. Dabei wird er, wahlweise ebenfalls als Lösung, vorteilhafterweise direkt der z.B. 70 - 120° C warmen Katalysatorlösung unter Rühren zugefügt, wobei ein Ausfallen des Lactamats vermieden wird.

Danach wird das fertige Flüssigsystem auf Raumtemperatur abgekühlt, wobei es dünnflüssig und lagerstabil bleibt und in dieser Form für die direkte Auslösung und Durchführung der Polymerisation von Lactam verwendet werden kann.

Durch die Verwendung des erfindungsgemässen Flüssigsystem kann sowohl in kontinuierlichen als auch in diskontinuierlichen Verfahren die Polymerisation der Lactamschmelze direkt ausgelöst werden, wonach sie in kurzer Zeit abläuft und ein hochwertiges, extraktarmes Polylactam entsteht, das insbesondere hervorragende, mechanische Eigenschaften besitzt.

Vorteilhaft werden dabei dem Lactam 0,5 bis 15 Gew.% des Flüssigsystems zugesetzt.

Speziell geeignet sind dabei Lactam 6, Lactam 12 oder ihre Gemische.

Von besonderem Interesse ist dabei die Verwendung des erfindungsgemässen Flüssigsystems zur Polymerisation von Lactam-12, die in einem sehr breiten Temperaturbereich von 170°C bis etwa 330°C durchgeführt werden kann, wobei die Umsetzungsgeschwindigkeit über die Temperaturführung gezielt eingestellt werden kann.

Ein weiterer wesentlicher Vorteil ist, dass bei der Verwendung des erfindungsgemässen Flüssigsystems zur Lactampolymerisation direkt von lagerstabilem Reinlactam ausgegangen werden kann, und die getrennte Herstellung von katalysatorhaltiger sowie aktivatorhaltiger Lactamschmelze mit ihrer beschränkten Lagerstabilität wegfällt.

Die Lactampolymerisation wird dadurch stark vereinfacht und kostengünstig gestaltet.

Die Verwendung des erfindungsgemässen Flüssigsystems als gleichzeitig katalysierender und aktivierender Zusatz zu einer Lactamschmelze ist speziell in Monomerguss- Extrusions-, Spritzguss-, Pultrusions-, -, Resintransfermolding-, Reactioninjectionmolding- und Rotomodling-Verfahren zur Herstellung von Gebrauchsgegenständen aus Polylactam sowie zur Herstellung von Faser-Verbundwerkstoffen mit Polylactam als Matrix von besonderem Vorteil.

Das Verfahren soll nun anhand von Beispielen näher erläutert werden.

Diese engen den Umfang der Erfindung nicht ein, sondern stellen nur eine Auswahl der sich neu eröffnenden Möglichkeiten dar:

Zur Herstellung des Flüssigsystems werden jeweils mindestens ein Solvatisierungsmittel S, ein Lactam L, eine Base B sowie eine die Polymerisationsreaktion aktivierende Substanz A eingesetzt.

Alle diese Substanzen müssen bestmöglich getrocknet sein.
Ist Restfeuchte vorhanden, so führt dies oft zur Bildung eines Anteils an Niederschlag im hergestellten Flüssigsystem, der vorteilhafterweise durch Dekantieren oder Filtration abgetrennt werden sollte. Ist die Feuchtigkeitsmenge insgesamt gering, so wird die Polymerisation von Lactam nach Zusatz von Flüssigsystem nicht wesentlich beeinträchtigt. Bei Feuchtikeitsgehalten zum Beispiel des Solvatisierungsmittels von 0.1 - 1,0 % oder bei Verwendung von ungenügend reinen Solvatisierungsmitteln, die z.B. noch alkoholisches oder phenolisches - OH oder auch NH- (Zerewitinoff H) enthalten, kann die Polymerisation stark verlangsamt oder ganz verhindert sein. Dies gilt auch, wenn von der Reaktion stammender Alkohol ungenügend entfernt ist.

Das Abwägen der Substanzen erfolgte daher im Falle der Laborversuche in einer mit trockenem Stickstoff gefluteten, mit Gummihandschuhen und Schleuse versehenen Plexiglasbox.

Zur Prüfung von geeigneten Kombinationen der Substanzen S, L, B und A zur Herstellung von Flüssigsystem im 100 g Ansatz wurde wie folgt vorgegangen:
Solvatisierungsmittel S wurde auf ca. 80°C erwärmt und darin das Lactam L gelöst. Danach wurde die Base B (meist Natriummethylat zu 30 Gew.-% gelöst in Methanol) langsam zugetropft und unter kontinuierlicher Vakuumeinwirkung und Rühren der Alkohol, entsprechend dem Lösemittelanteil sowie dem Reaktionsprodukt aus der Neutralisationsreaktion des Lactams, fortwährend abgezogen.

Nach Zugabe der beinahe stöchiometrischen Menge der Base B wurde unter Rühren das Vakuum noch ca. ½ Stunde beibehalten und dabei die Temperatur je nach verwendetem Aktivator A auf 80 - 140°C erhöht.

Nach Brechen des Vakuums wurde nun der Aktivator A unter trockenem Stickstoff zugetropft.

Falls A ein Feststoff ist, wie z.B. im Falle vieler Carbodiimide, führt Versetzen mit wenig S (z.B. 25 - 30 Gew.-% bezogen auf A) und leichtes Erwärmen zur Verflüssigung, so dass kontinuierliches Zutropfen unter Stickstoff und Rühren erfolgen kann. Während des Zutropfens von A wird die Reaktionslösung auf 80 - 100°C gehalten, sowie diese Temperatur danach noch während ca. 10 Minuten beibehalten und danach auf Raumtemperatur abgekühlt.

Dabei entsteht ein stabiles Flüssigsystem, das die Lactampolymerisation direkt auslösen kann.
Entsteht beim Abkühlen ein Niederschlag in geringem Anteil, so kann dies auf Spuren von Wasser und/oder Verunreinigungen der Komponenten zurückzuführen sein. Nach Absetzen des Niederschlages kann abdekantiert oder filtriert werden, aber auch zur Prüfung der Aktivität des Systems die Probemenge dem überstehenden, klaren Anteil entnommen werden. Versuche haben bestätigt, dass bei Zugabe von Systemen mit einem Feststoffanteil die Polymerisation im allgemeinen in kaum festellbarem Ausmass beeinträchtigt ist. Die Versuche im 100 g-Massstab sind in Tabelle **1** zusammengefasst.

*In Tabelle 1 bedeuten:*
- S:: das Löse- und Solvatisierungsmittel
- L:: das Lactam
- B:: die zur Neutralisation verwendete Base
- A:: der die Lactampolymerisation beschleunigende Aktivator
- DMPU:: Dimethylpropylenharnstoff
- DMI:: Dimethylethylenharnstoff
- NMP:: N-Methylpyrrolidon
- W300:: Diisotridecylphthalat
- MPP:: Methoxypropylpyrrolidon
- TEGDE:: Tetraethylenglykoldimethylether

- BH:: Tetrabutylharnstoff
- LC-4,LC-5-LC-6:: Lactame mit 5-, 6- und 7-gliedrigem Ring
- NaM:: Natriummethylat
- KM:: Kaliummethylat
- MgE:: Magnesiumdiethylat
- NaN:: Natriumamid
- DCC:: Dicylohexylcarbodiimid
- Lox:: mit Ricinyloxazolin verkapptes Toluydindiisocyanat
- IL-6:: Caprolactam-verkapptes Methylendiisocyanat
- CD:: Bis-(2.6-Diisopropylphenyl)carbodiimid

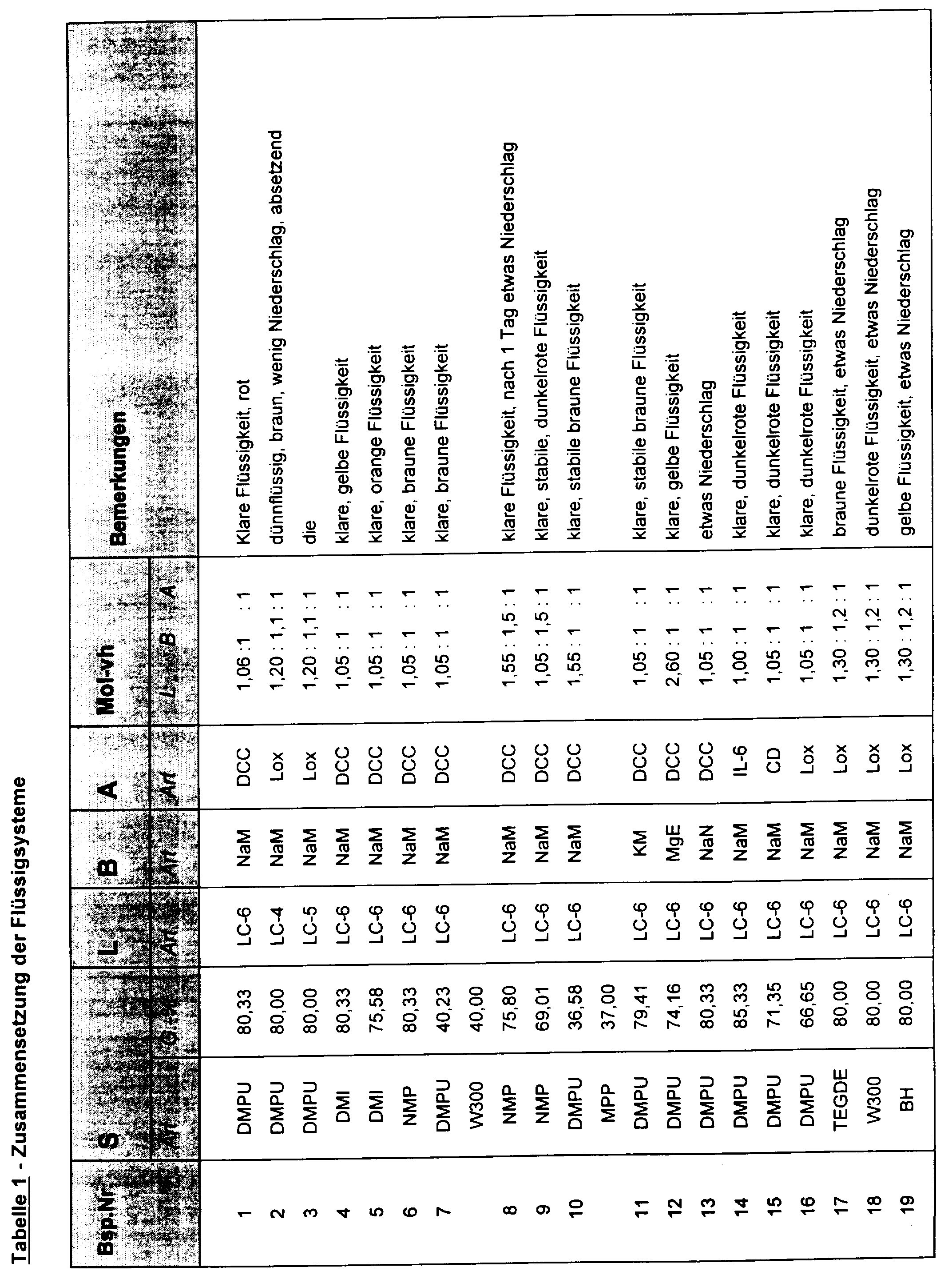

In Tabelle 2 sind Polymerisationsversuche von Lactam 12 bei Zugabe von einheitlich 3 Gew.-% des jeweiligen Flüssigsystems zusammengefasst.
Dazu wurden jeweils 100 g Lactam-12 unter Rühren und Stickstoff aufgeschmolzen und nach Erreichen der vorgegebenen Temperatur das Flüssigsystem zugefügt.

Die Zeit tᵤ ist die Zeit ab Zugabe des Flüssigsystems bei welcher der Magnetrührer stehen bleibt. Nach dessen rascher Entfernung wird die Schmelze noch während der vorgegebenen Zeit zu Ende polymerisiert, das Polymer dann abgekühlt, zerkleinert und ggf. einer Analyse unterzogen.

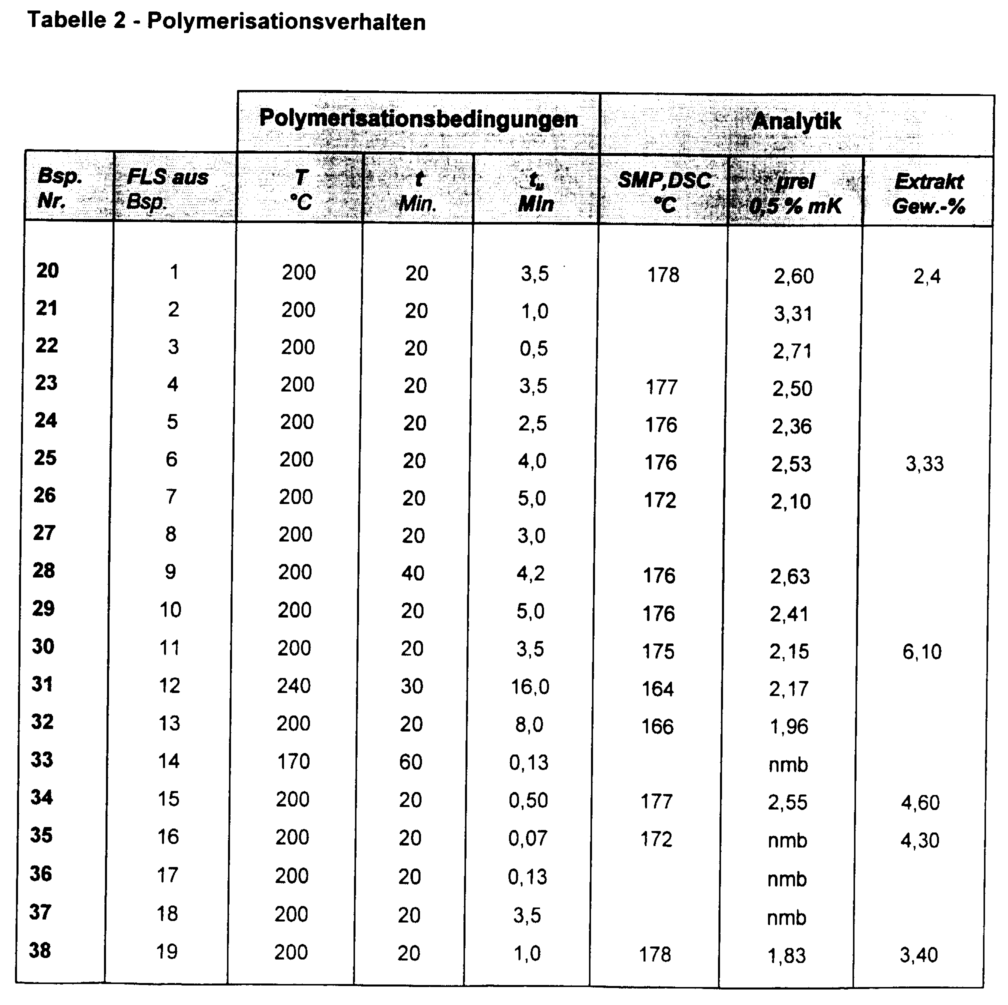

*In Tabelle 2 bedeutet:*
- FLS:: Flüssigsystem
- T:: die Massetemperatur bei der Polymerisation
- t:: die gesamte Polymerisationszeit
- SMP, DSC:: das mittels DSC-Methode gemessene Schmelzpunktmaximum
- µrel:: die relative Lösungsviskosität, gemessen an einer 0,5 prozentigen Lösung in Metakresol
- nmb:: nicht messbar nach üblicher Methode, µrel sehr hoch,
- Extrakt:: der Gesamtextrakt nach Extraktion mit siedendem Methanol

### Beispiele 39 - 47 (Tabelle 3)

Diese Beispiele enthalten Flüssigsysteme, die auf DMPU als Solvatisierungsmittel S basieren und über die Reaktion von Natriummethylat mit Caprolactam in DMPU und anschliessender Zugabe von Carbodiimid bzw. verkapptem Isocanat hergestellt wurden. Die Herstellung erfolgte entsprechend der Beschreibung bei den Beispielen 1 - 19.

In allen Fällen resultierten lagerstabile, rotbraun gefärbte Flüssigkeiten mit welchen die Polymerisation von Lactam 12 mit guter Reproduzierbarkeit durchgeführt werden kann. Ihre Viskosität hängt ab vom Anteil der Komponente S. So ist z.B. das Produkt zu Versuch 45 hochviskos während das Produkt entsprechend Versuch 46 wieder dünnflüssig ist. Die Viskosität kann leicht auch durch Erhöhung der Temperatur reduziert werden. Für den Praxiseinsatz können die Produkte bis auf 100, kurzzeitig sogar bis auf 130°C erwärmt werden, ohne dass ihre Reaktivität nachlässt, was die Einsatzmöglichkeit solcher Systeme deutlich verbreitert.

### Flüssigsysteme mit DMPU als Solvatisierungsmittel

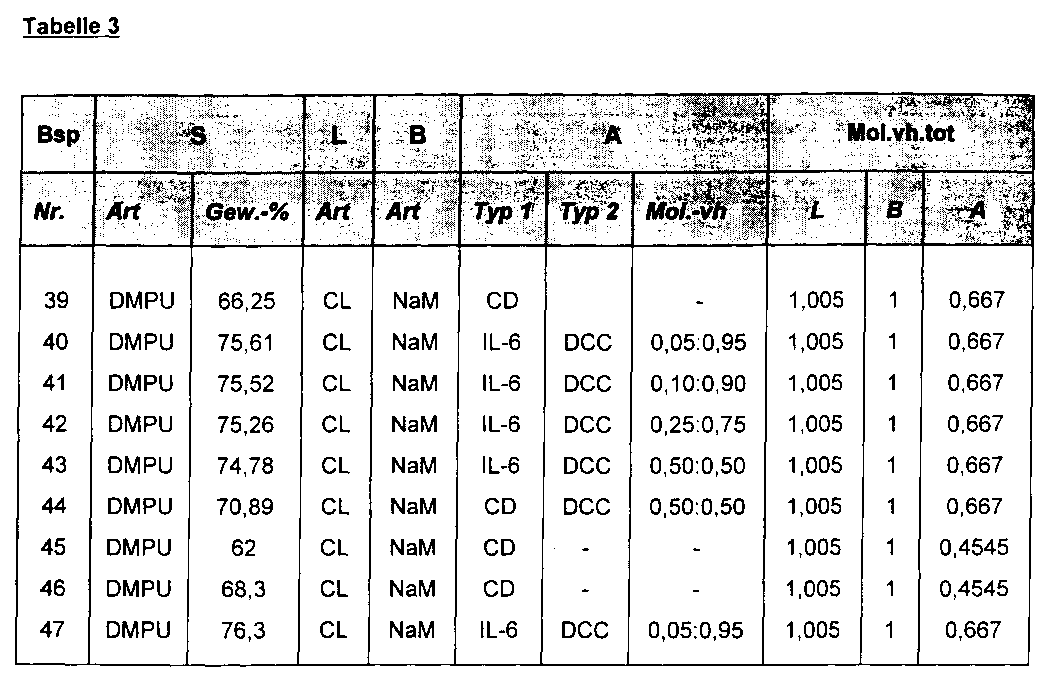

In Tabelle 4 ist in Beispiel 48 - 56 das Verhalten bei der Polymerisation von Lactam 12 bei der Zugabe von Flüssigsystem aus Beispiel 39 - 47 zusammengefasst. Für gute Vergleichbarkeit wurde dabei einheitlich 3 Gew.-% des Flüssigsystems zugefügt.

Wie ein Vergleich der Beispiele 48 bis 51 und hier insbesondere der Zeit Tᵤ, zeigt, kann über das Verhältnis der Komponenten A die Geschwindigkeit der Polymerisation wesentlich beeinflusst werden.

Ein Vergleich vom Beispiel 54 mit Beispiel 48 zeigt ferner, dass auch über Variation des Verhältnisses B:A tᵤ beeinflusst werden kann. Bei Beispiel 46 im Vergleich zu Beispiel 45 ist der Anteil des Solvatisierungsmittels erhöht. Dadurch wird die Viskosität des Systems herabgesetzt. Bei den entsprechenden Polymerisationsbeispielen 55 und 54, wurden kaum Änderungen im Polymerisationsverhalten festgestellt.
Die Polymerisation erfolgte im Beispiel 56 bei 220 C und bei 240°C unter Einhaltung einer Gesamtpolymerisationszeit von 5 und 3 Minuten. Die gemessenen Extraktwerte belegen, dass eine sehr rasche Polymerisation erfolgt ist.

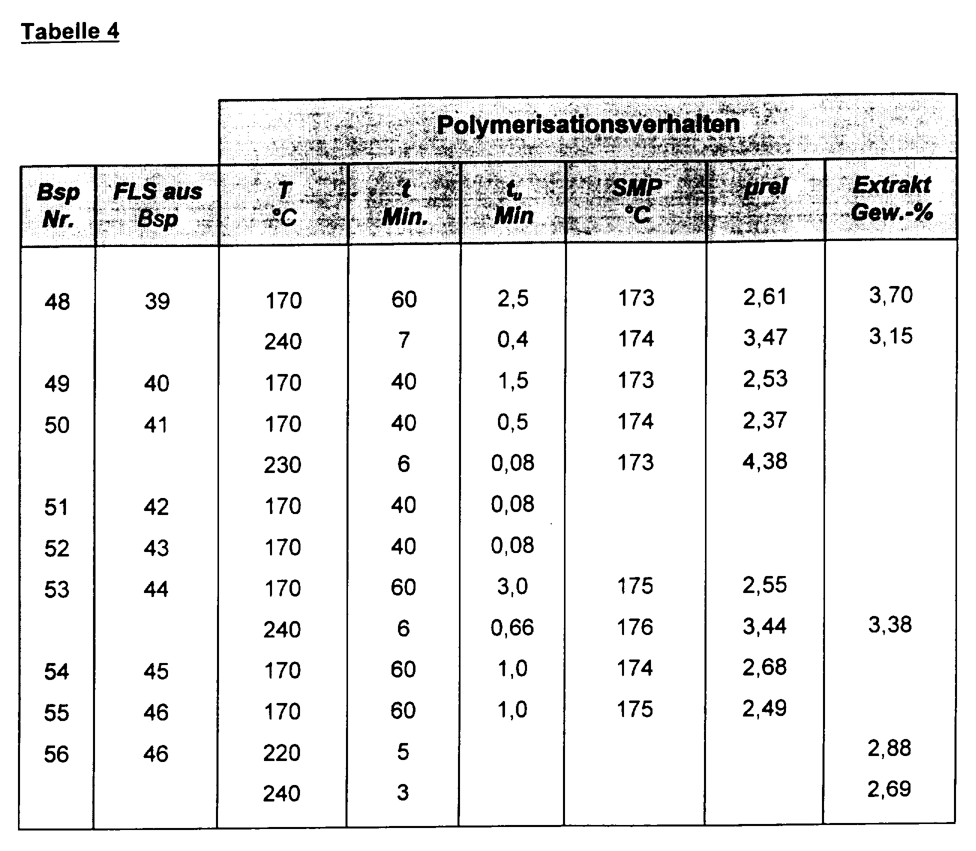

Ergänzende, im einzelnen nicht aufgeführte Versuche wurden mit geändertem Anteil an Flüssigsystem durchgeführt. Wird dabei der Anteil des Flüssigsystems reduziert, z.B. auf 1,5 Gew.-%, so verläuft die Polymerisation langsamer und führt gleichzeitig zu höheren Molekulargewichten. Wird mehr Flüssigsystem zugefügt, z.B. 5 Gew.-%, so verläuft die Polymerisation schneller. Gleichzeitig sind dabei der Wert von µrel tiefer und damit das Molekulargewicht niedriger.

### Beispiel 57

Für Anwendungsversuche wurden 40 kg Flüssigsystem aus Natriumcaprolactamat und DCC in DMPU hergestellt, wobei Natriumcaprolactamat und DCC im Molverhältnis 1,5 : 1 eingesetzt wurden und man mit einem sehr geringen Lactam-6 Überschuss arbeitete.

Dazu wurden 4,15 kg Lactam-6 bei 120°C in DMPU gelöst und anschliessend bei einem Vakuum von ca. 230 mbar unter Rühren langsam 6,58 kg 30-prozentige Natriummethylatlösung zugetropft.
Dadurch wurde Methanol kontinuierlich aus der Reaktionsmischung entfernt, und die Temperatur des Flüssigsystems reduzierte sich auf ca. 90°C.

Nach Beendigung der Natriummethylatzugabe wurde das Vakuum auf 50 mbar erhöht und noch während 30 Minuten aufrechterhalten. Dann wurde es mit trockenem Stickstoff gebrochen und 4,740 kg DCC gelöst in DMPU unter Rühren zugefügt. Das Reaktionsprodukt wurde sodann auf 65°C abgekühlt und in 4 10 Ltr. Polyethylenflaschen abgefüllt. - Bei Zugabe von 3 Gew.-% des Flüssigsystems zu einer Lactam-12 Schmelze bei 200°C und einer Polymerisationszeit von 25 Minuten resultierte ein Polyamid-12 mit einem Schmelzpunkt von 174°C, einem µrel von 2,50 und einem Gesamtextrakt in Methanol von 2,5 Gew.-%.

### Beispiel 58

Unter Verwendung des Flüssigsystems aus Versuch 56 wurde auf einem Doppelwellenextruder, ZSK 30, der Fa. Werner + Pfleiderer, Stuttgart (D) aus Lactam 12 mit kontinuierlichem Zudosieren des Systems direkt das Polymer hergestellt.

Dazu wurde der 2-gängige Doppelwellenkneter (L/D-Verhältnis 36) mit einem speziellen Schneckenpaar versehen, welches Zudosieren von Festlactam in Schuppenform und rasches Aufschmelzen, sodann kontinuerliches Zudosieren und homogenes Einmischen von Flüssigsystem und danach kontinuierlich ablaufende Polymerisation und Förderung der entstehenden Polymerschmelze zur Austragdüse erlaubt. Ergänzend wurde Entgasung der Schmelze an mehreren Stellen vorgesehen.

Das Flüssigsystem wurde mittels einer oszillierenden Hubkolbenpumpe bei einem Druck von 15 - 20 Bar kontinuierlich in die Lactamschmelze eingespritzt.

Um auch das Einspritzen bei variierendem Durchsatz zu ermöglichen, wurden 3 Teile des Systems mit 1 Teil reinem DMPU verdünnt. Dieses System erhielt die Bezeichnung FLS*.

In *Tabelle 5* sind ausgewählte Einstellparameter der Versuchsreihe mit dem Doppelwellenextruder sowie die Grundanalysenwerte je der zugehörigen Produkte aufgeführt.
Ergänzend zu den aufgeführten Versuchsparametern wurden:
· die Drehzahl von 100 - 200 UpM
· der Durchsatz von 6,5 - 12,5 kg/h
· die Massetemperatur des Flüssigsystems von 70 - 130°C
· die Konzentration von FLS* von 3 - 6 Gew.-% und
· die Temperatur der Schmelze in der Polymerisationszone von 290 - 325 °C variiert.

In allen diesen Fällen, mit der einzigen Ausnahme der erhöhten Schmelzetemperatur, resultierte ein glatter, nahezu transparenter Extrusionsstrang, der nach Kühlung und Granulierung zu ein über Spritzguss und Extrusion gut verarbeitbares Granulat ergab.

In allen Fällen, in denen die Massetemperatur unter 310°C gehalten wurde und das FLS* zu 4 Gew.-% eingesetzt wurde, resultierten eine Lösungsviskosität von mindestens 2,30; ein SMP von mind. 273°C und ein Extrakt von max. 4,2 Gew.-%, wobei zu berücksichtign ist, dass die Komponenten des Flüssigsystems wesentlich zum Extrakt beitragen.

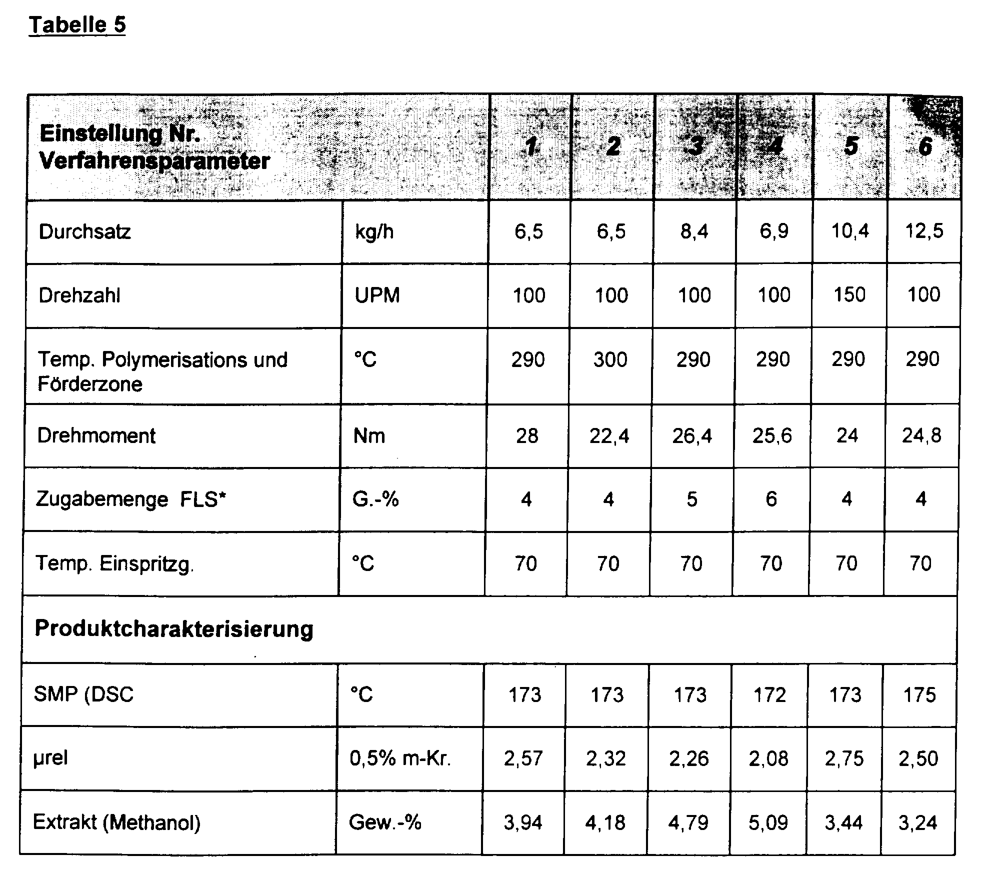

### Beispiel 59

Dieses Beispiel beschreibt die Herstellung und Anwendung eines Flüssigsystems, das zusätzlich Komponente Z in Form von Hitze- und Lichtstabilisator enthält. Dazu wurde ein Flüssigsystem mit Zusammensetzung gemäss Versuch 56 im 100 g-Masstab hergestellt und nach Zugabe der Komponente A (je bezogen auf die vorliegende Masse,) 3 Gew.-% Tinuvin 765 als Lichtstabilisator und 2 Gew.-% Irganox 1135 als Hitzestabilisator zugefügt, abgekühlt, und sodann 4 Gew.-% dieses Systems zu 100 g gerührter Lactam-12 Schmelze bei 200°C zugefügt. Die Polymerisation verlief problemlos. Der Rührer blieb nach 1,5 Minuten stehen. Nach einer Gesamtpolymerisationszeit von 30 Minuten betrug die µrel 2,527 bei einem Extrakt von 3,18% und einem Schmelzpunkt von 176,1° C.

### Beispiele 60 - 64

Diese Beispiele betreffen die Polymerisation von Caprolactam unter Verwendung von Flüssigsystem aus Versuch 56.

Dazu wurde gut getrocknetes Caprolactam von sogenannter Monomergussqualität der Firma DSM Fiber Intermediates BV, Holland, verwendet und unter trockenem Stickstoff gearbeitet.

Je 100 g Caprolactam wurden unter Rühren mit einem Magnetrührer aufgeschmolzen und unterschiedliche Gewichtsanteile des Flüssigsystems zugefügt. Die Versuche sind in Tabelle 6 zusammengefasst. Die Abkürzungen entsprechen der Legende zu Tabelle 1 und 2.
Wie die Versuchsergebnisse belegen, eignet sich das nach dem erfingungsgemässen Verfahren hergestellte Flüssigsystem, ausgezeichnet zur Polymerisation von Lactam-6.

### Polymerisation von Caprolactam

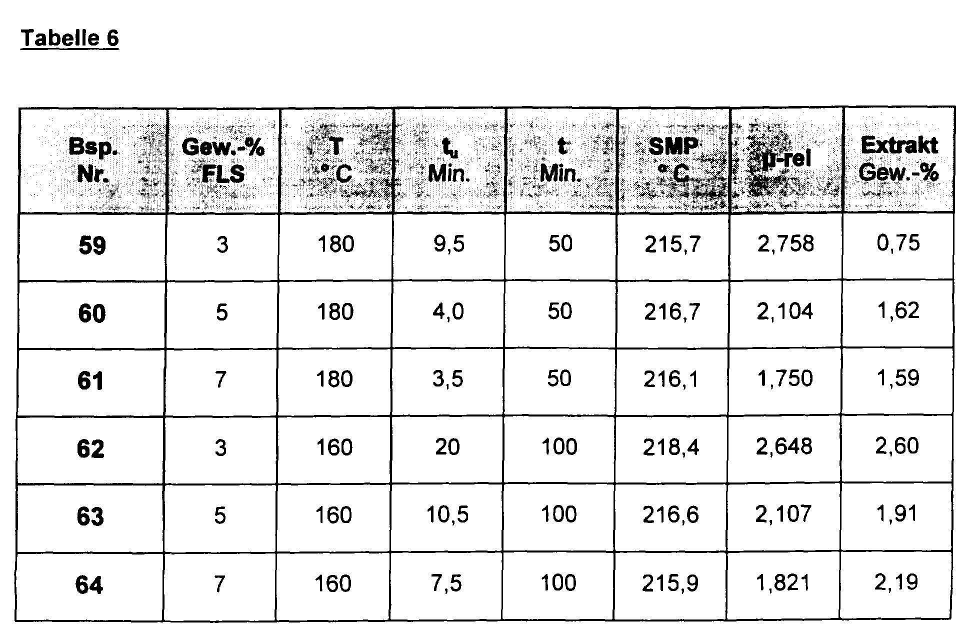

### Beispiele 65 - 73

In Tabelle 7 sind weitere Beispiele zusammengefasst.
Dabei wurden zusätzliche Aktivatoren A verwendet und der Anteil an Solvatisierungsmittel S so gewählt, dass für die Polymerisation von Lactam 12 die Zugabe von 0,5 bis 3,0 Gewichts-Teilen des jeweiligen Flüssigsystems zu 100 Gewichts-Teilen an geschmolzenem Lactam 12 genügt, um eine rasche und vollständige Polymerisation zu gewährleisten.

In Tabelle 7 bedeuten:
- Komponenten Art:: die für die Synthese verwendeten Verbindungen.
- Komp. Molv.:: das Molverhältnis der eingesetzten Komponenten,
- S, Gew.%: der Gewichtsanteil an Solvatisierungsmittel im Flüssigsystem,
- FLS, T.le: die Gewichtsteile an Flüssigsystem, die zu 100 Gew.-Teilen, Lactam 12 -Schmelze zugefügt wurden,
- TPC:: Tripropylisocyanurat,
- PHI:: Phenylisocyanat,
- TMI:: das Isocyanat der Formel 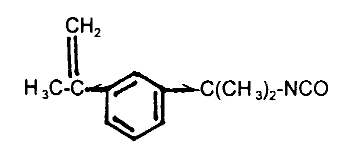
- NaC:: Natriumcaprolactamat

Die Polymerisationsbedingungen und die Analytik sind die gleichen wie in Tabelle 2.

In den Beispielen **65, 66** und **67** ist je der Gewichtsanteil von S variiert, wobei in Beispiel 65 weniger als 50 Gew.-Teile Solvatisierungsmittel verwendet wurden.
Schon bei Zugabe von 1,13 Gew.-Teilen Flüssigsystem aus Beispiel 66 zur Lactamschmelze zeigt sich ein ausgezeichnetes Polymerisationsverhalten.

Vom Flüssigsystem des Beispiel **66** wurden 0,5 bis 10 Gew.-Teile der Lactam 12-Schmelze zugefügt. Dabei zeigte sich, dass bei geringeren Zugabemengen die Polymerisation länger dauert, aber zu sehr hohen Molekulargewichten des Polylactams führt, während sie bei höheren Zugabemengen an Flüssigsystem rasch abläuft, wobei niedrigere Molekulargewichte resultieren.

In den Beispielen **68** bis **73** wurden als Isocyanurat TPC und verschiedene Isocyanate als Aktivator A verwendet.

In Beispiel 68 wurden pro Gew.-Teil TPC 2 Gew.-Teile NaC verwendet.

Ergänzende Versuche belegen, dass das Verhältnis von NaC zu TPC von 1 bis 3 gut variiert werden kann, wobei die Verhältnisse zwischen 2 und 3 besonders gut geeignet sind.

Wie die gemessenen tᵤ-Werte zeigen, sind die Flüssigsysteme auf Isocyanat-Basis in der Anfangsphase der Polymerisation schnell.

Ergänzend kann bei der Herstellung von Flüssigsystemen auf Basis Isocyanat direkt von verkapptem, insbesondere lactamverkapptem Isocyanat ausgegangen werden.
Dabei wird vorteilhaft so vorgegangen werden, dass man das verkappte Isocyanat im Solvatisierungsmittel löst und danach die Base, zum Beispiel Natriummethylat, NaM, insbesondere im Verhältnis von ca. 1 NaM pro verkappte Isocyanat-Gruppe, zufügt und das Neutralisationsprodukt der Base sowie das Lösemittel für die Base, z.B. Methylalkohol, vollständig entfernt.
Nach Abkühlen liegt gemäss diesem modifizierten Herstellungsverfahren bereits das Flüssigsystem vor.

Die Flüssigsysteme auf Basis Isocyanat und Isocyanurat sind im allgemeinen niederviskos und meist von guter Ausgangsfarbe.
Sie sind insbesondere dort geeignet, wo Zwangsmischung und -Förderung der resultierenden Polylactamschmelze erfolgt, wie z.B. bei der kontinuierlichen Lactampolymerisation in einem Doppelwellenextruder.

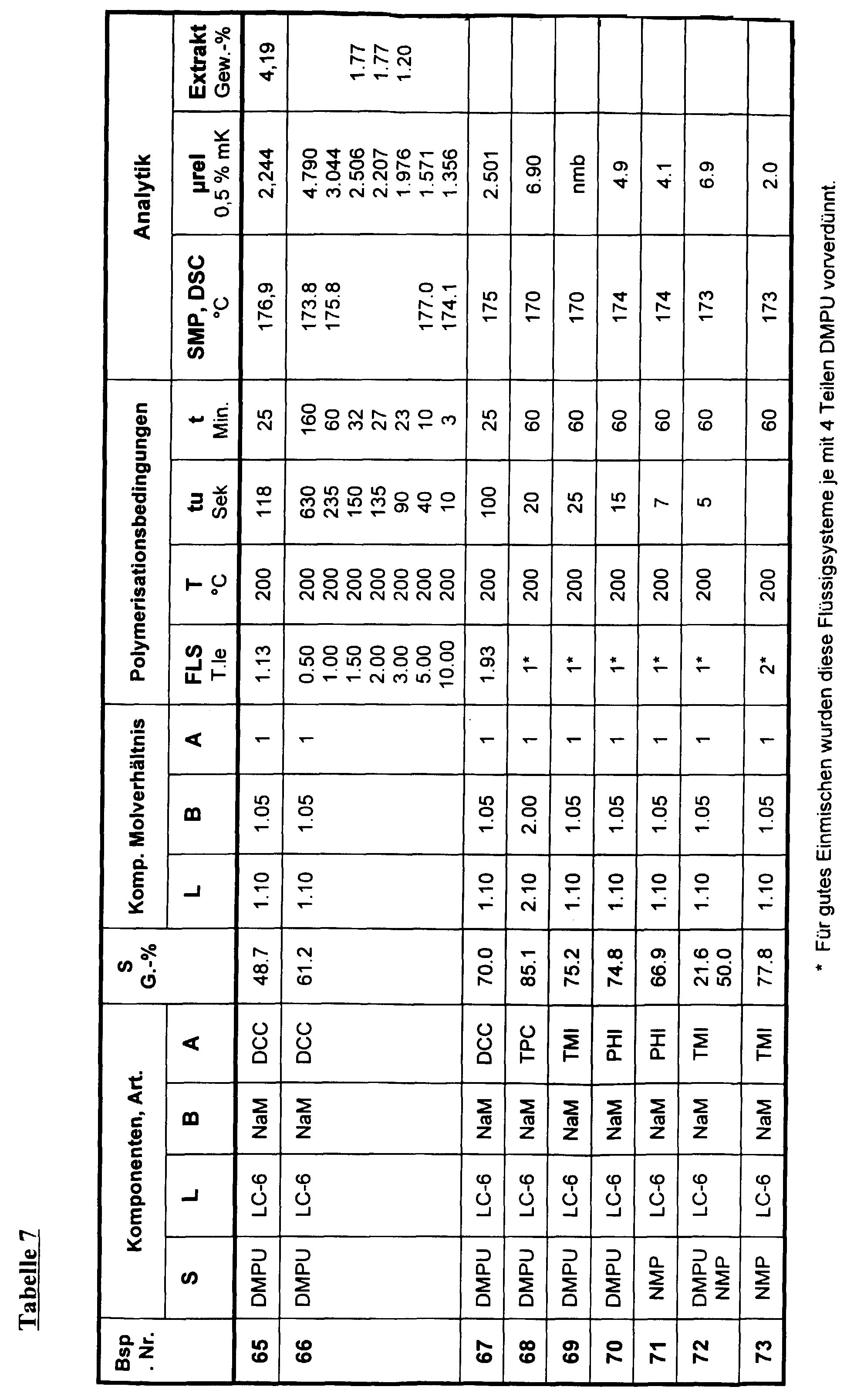

## Patentansprüche

1. Verfahren zur Herstellung eines katalytisch wirksamen Flüssigsystems zur Durchführung der Lactam-Polymerisation, welches bei Raumtemperatur lagerstabil und flüssig ist und in welchem unter Inertgas und Feuchtigkeitsausschluss in mindestens einem flüssigen, polaren, aprotischen Solvatisierungsmittel (S) ein gleichzeitig die Wirkung von Katalysator und Aktivator ausübendes Reaktionsprodukt hergestellt wird durch die Schritte:
a) Lösen mindestens eines zur Lactamat bildung befähigten Lactams (L) im Solvatisierungsmittel (S),
b) Zugabe von mindestens einer starken Base (B) und
Umsetzung des mindestens einen Lactams (L) zum Lactamat,
c) Zugabe von mindestens einem Aktivator (A) und dessen Umsetzung mit dem Lactamat,
d) Abkühlung der Lösung des Reaktionsproduktes auf Raumtemperatur,
wobei das Lactam (L) und die Base (B) in stöchiometrischen Anteilen oder mit einem solchen Lactamüberschuss eingesetzt werden, dass weniger als 400 Gew.-Teile freies Lactam bezogen auf freies Lactamat vorliegen.

2. Verfahren nach Anspruch 1,
dadurch gekennzeichnet, dass
das Lactam (L) und die Base (B) in stöchiometrischen Anteilen oder mit einem minimalen Lactamüberschuss von maximal 10 Mol% eingesetzt werden.

3. Verfahren zur Herstellung eines Flüssigsystems nach Anspruch **1** oder **2**,
***dadurch gekennzeichnet, dass***
die mindestens eine Base (B) und/oder der mindestens eine Aktivator (A) in dem Solvatisierungsmittel oder einem Lösungsmittel oder einem Oxidationsschutzmittel gelöst oder suspendiert eingebracht werden,

4. Verfahren zur Herstellung eines Flüssigsystems nach einem der Ansprüch **1** bis **3**,
***dadurch gekennzeichnet, dass***
unter Vakuumeinwirkung und Wärmezuführung Löse- und/oder Suspensionsmittel und/oder Oxidationsschutzmittel für die Base (B), sowie gegebenenfalls die Neutralisationsprodukte der Base (B) entfernt werden.

5. Verfahren zur Herstellung eines Flüssigsystems nach einem der vorangehenden Ansprüche,
***dadurch gekennzeichnet, dass***
das Solvatisierungsmittel (S) eine Verbindungen ist, ausgewählt aus der Gruppe veretherte Polyole, veresterte Polyglykole, Phthalsäureester, Tetraalkylharnstoffe, N-alkylierte Carbonsäureamide oder deren Gemische.

6. Verfahren zur Herstellung eines Flüssigsystems nach Anspruch **5**,
***dadurch gekennzeichnet, dass***
der Tetraalkylharnstoff ausgewählt ist aus der Gruppe Tetramethylharnstoff, Tetraethylharnstoff, Tetrabutylharnstoff oder eine cyclische Struktur gemäss der allgemeinen Formel I hat, 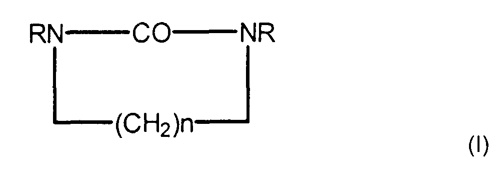 in welcher R ein Alkylrest , insbesondere ein Methylrest und n = 2 und 3 ist.

7. Verfahren zur Herstellung eines Flüssigsystems nach einem der vorangehenden Ansprüche,
***dadurch gekennzeichnet, dass***
das Lactam (L) einen 5- bis 13-gliedrigen Ring aufweist.

8. Verfahren zur Herstellung eines Flüssigsystems nach einem der vorangehenden Ansprüche
***dadurch gekennzeichnet, dass***
das Lactam (L) einen 5- bis 7-gliedrigen Ring aufweist.

9. Verfahren zur Herstellung eines Flüssigsystems nach einem der vorangehenden Ansprüche
***dadurch gekennzeichnet, dass***
das Lactam (L) Caprolactam ist.

10. Verfahren zur Herstellung eines Flüssigsystems nach einem der vorangehenden Ansprüche
***dadurch gekennzeichnet, dass***
das Kation der Base (B) ein Alkali-, Erdalkali- oder Tetraalkylammonium-Kation ist.

11. Verfahren zur Herstellung eines Flüssigsystems nach einem der vorangehenden Ansprüche
***dadurch gekennzeichnet, dass***
die Base (B) ein Alkoholat, ein Amid, ein Hydrid, ein Alkylanion oder eine Grignardverbindung ist.

12. Verfahren zur Herstellung eines Flüssigsystems nach einem der vorangehenden Ansprüche
***dadurch gekennzeichnet, dass***
die Base (B) ein Alkali- oder Erdalkaliethylat oder ein Alkali- oder Erdalkalimethylat ist.

13. Verfahren zur Herstellung eines Flüssigsystems nach einem der vorangehenden Ansprüche
***dadurch gekennzeichnet, dass***
die Zugabe der Base (B) als Lösung, Suspension oder in Form eines feinteiligen Feststoffes erfolgt.

14. Verfahren zur Herstellung eines Flüssigsystems nach einem der vorangehenden Ansprüche
***dadurch gekennzeichnet, dass***
der Aktivator (A) mindestens eine Verbindung, ausgewählt aus der Gruppe Carbodiimid, Polycarbodiimid, Monoisocyanat und Diisocyanat ist.

15. Verfahren zur Herstellung eines Flüssigsystems nach einem der vorangehenden Ansprüche
***dadurch gekennzeichnet, dass***
das Mono- oder Diisocyanat eine aliphatische, cycloaliphatische, aliphatisch-aromatische oder aromatische Grundstruktur hat.

16. Verfahren zur Herstellung eines Flüssigsystems nach einem der vorangehenden Ansprüche
***dadurch gekennzeichnet, dass***
die Grundstruktur des Isocyanates die des Toluol, Isophoron, Xylol, Diphenylmethan, Hexan oder Cyclohexan ist.

17. Verfahren zur Herstellung eines Flüssigsystems nach einem der vorangehenden Ansprüche
***dadurch gekennzeichnet, dass***
die Monoisocyanate und Diisocyanate verkappt sind mit Verbindungen, ausgewählt aus der Gruppe Lactam und Hydroxyfettalkyloxazolin.

18. Verfahren zur Herstellung eines Flüssigsystems nach einem der vorangehenden Ansprüche
***dadurch gekennzeichnet, dass***
das Carbodiimid ausgewählt ist aus der Gruppe N,N'-Dicyclohexylcarbodiimid, N,N'-Diisopropylcarbodiimid, N,N'-Di-(o-toluyl)carbodiimid, 2,2',6,6'-Tertraisopropyldiphenyl-carbodiimid, und Poly-(2,2'-diisopropyl)-p-phenylencarbodiimid.

19. Verfahren zur Herstellung eines Flüssigsystems nach einem der vorangehenden Ansprüche
***dadurch gekennzeichnet, dass***
pro Mol Lactamat 0,4 bis 1 Mol an Aktivator (A) eingesetzt werden.

20. Verfahren zur Herstellung eines Flüssigsystems nach einem der vorangehenden Ansprüche,
***dadurch gekennzeichnet, dass***
das Lactamat und der Aktivator (A) im stöchiometrischen Verhältnis ihrer funktionellen Gruppen eingesetzt werden.

21. Verfahren zur Herstellung eines Flüssigsystems nach einem der vorangehenden Ansprüche
***dadurch gekennzeichnet, dass***
in einem beliebigen Verfahrensschritt Additive, ausgewählt aus der Gruppe Entformungsmittel, Entschäumer, Stabilisatoren, Nukleierungsmittel, Tracer, optische Aufheller, Weichmacher, Schlagzähmittel und Farbstoffe, zugesetzt werden.

22. Verfahren zur Herstellung eines Flüssigsystems nach einem der vorangehenden Ansprüche
***dadurch gekennzeichnet, dass***
die einzelnen Reaktionsschritte bei Temperaturen zwischen 70 und 130°C ablaufen.

23. Verfahren zur Herstellung eines Flüssigsystems nach einem der vorangehenden Ansprüche
***dadurch gekennzeichnet, dass***
das Solvatisierungsmittel (S) einen Siedepunkt im Bereich von 80 bis 330°C hat.

24. Verfahren zur Herstellung eines Flüssigsystems nach Anspruch **23**
***dadurch gekennzeichnet, dass***
das Solvatisierungsmittel (S) einen Siedepunkt im Bereich von 80 bis 160°C hat.

25. Verfahren zur Herstellung eines Flüssigsystems nach Anspruch **23**,
***dadurch gekennzeichnet, dass***
das Solvatisierungsmittel (S) einen Siedepunkt von mindestens 200°C hat.

26. Verfahren zur Herstellung eines Flüssigsystems nach einem der Ansprüche **1** bis **22**
***dadurch gekennzeichnet, dass***
das Solvatisierungsmittel (S) ein Gemisch ist aus mindestens einer hochsiedenden und mindestens einer tiefsiedenden Komponente.

## Claims

1. Method for preparing a catalytically efficient liquid system for carrying out lactam polymerisation, which system is stable in storage and liquid at room temperature and in which, whilst excluding inert gas and moisture, a reaction product simultaneously exerting the action of a catalyst and activator is prepared in at least one liquid, polar, aprotic solvating agent (S), by the following steps:
a) dissolving in the solvation agent (S) at least one lactam (L) qualified for lactam formation,
b) adding at least one strong base (B) and reacting the at least one lactam (L) to produce the lactamate,
c) adding at least one activator (A) and reacting same with the lactamate,
d) cooling the solution of the reaction product to room temperature, the lactam (L) and the base (B) being employed in stoichiometric proportions or with a lactam surplus such that fewer than 400 parts by wt. of free lactam are present, based on free lactamate.

2. Method according to claim 1,
characterised in that the lactam (L) and the base (B) are employed in stoichiometric proportions or with a lactam surplus of not more than 10 mole %.

3. Method for preparing a liquid system according to claim 1 or 2,
characterised in that the at least one base (B) and/or the at least one activator (A) are dissolved or suspended in the solvation agent or a solvent or an antioxidising agent.

4. Method for preparing a liquid system acording to any of claims 1 to 3,
characterised by the removal of solvents and/or suspending agents and/or antioxidising agents for the base (B), and if appropriate the neutralising products of the base (B), whilst operating in a vacuum and applying heat.

5. Method for preparing a liquid system according to any of the preceding claims,
characterised in that the solvation agent (S) is a compound selected from the group comprising etherified polyols, esterified polyglycols, phthalic acid esters, tetra-alkyl ureas, N-alkylated carboxylic acid amides or mixtures thereof.

6. Method for preparing a liquid system according to claim 5,
characterised in that the tetra-alkyl urea is selected from the group comprising tetramethyl urea, tetraethyl urea, tetrabutyl urea or has a cyclic structure in accordance with structural formula I 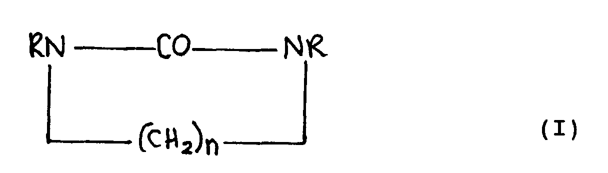 where R is an alkyl radical, more particularly a methyl radical, and n = 2 and 3.

7. Method for preparing a liquid system according to any of the preceding claims,
characterised in that the lactam (L) has a 5- to 13-membered ring.

8. Method for preparing a liquid system according to any of the preceding claims,
characterised in that the lactam (L) has a 5- to 7-membered ring.

9. Method for preparing a liquid system according to any of the preceding claims,
characterised in that the lactam (L) is caprolactam.

10. Method for preparing a liquid system according to any of the preceding claims,
characterised in that the cation of the base (B) is an alkal cation, alkaline earth cation or tetra-alkyl ammonium cation.

11. Method for preparing a liquid system according to any of the preceding claims,
characterised in that the base (B) is an alcoholate, an amide, a hydride, an alkyl anion or a Grignard compound.

12. Method for preparing a liquid system according to any of the preceding claims,
characterised in that the base (B) is an alkali ethylate or alkaline earth ethylate or an alkali methylate or alkaline earth methylate.

13. Method for preparing a liquid system according to any of the preceding claims,
characterised in that the base (B) is added as a solution, a suspension or in the form of a finely divided solid.

14. Method for preparing a liquid system according to any of the preceding claims,
characterised in that the activator (A) is at least one compound, selected from the group comprising carbodiimide, polycarbodiimide, monoisocyanate and diisocyanate.

15. Method for preparing a liquid system according to any of the preceding claims,
characterised in that the monoisocyanate or diisocyanate has an aliphatic, cycloaliphatic, aliphatic aromatic or aromatic basic structure.

16. Method for preparing a liquid system according to any of the preceding claims,
characterised in that the basic structure of the isocyanate is that of toluene, isophorone, xylene, diphenyl methane, hexane or cyclohexane.

17. Method for preparing a liquid system according to any of the preceding claims,
characterised in that the monoisocyanates and diisocyanates are capped with compounds selected from the group comprising lactam and hydroxy aliphatic alkyl oxazoline.

18. Method for preparing a liquid system according to any of the preceding claims,
characterised in that the carbodiimide is selected from the group comprising N,N'-dicyclohexyl carbodiimide, N,N'-diisopropylcarbodiimide, N,N'-di-(o-toluyl)carbodiimide, 2,2',6,6'-tetraisopropyldiphenyl carbodiimide, and poly-(2,2'-diisopropyl)-p-phenylene carbodiimide.

19. Method for preparing a liquid system according to any of the preceding claims,
characterised in that 0.4 to 1 mole of activator (A) is used per mole of lactamate.

20. Method for preparing a liquid system according to any of the preceding claims,
characterised in that the lactamate and the activator (A) are employed in a stoichiometric ratio of their functional groups.

21. Method for preparing a liquid system according to any of the preceding claims,
characterised by the addition, in any desired process step, of additives selected from the group comprising demoulding agents, defoaming agents, stabilisers, nucleating agents, tracers, optical whitening agents, softeners, impact strengthening agents and colourants.

22. Method for preparing a liquid system according to any of the preceding claims,
characterised in that the individual reaction steps take place at temperatures between 70 and 130 °C.

23. Method for preparing a liquid system according to any of the preceding claims,
characterised in that the solvation agent (S) has a boiling point in the range from 80 to 330 °C.

24. Method for preparing a liquid system according to claim 23,
characterised in that the solvation agent (S) has a boiling point in the range from 80 to 160 °C.

25. Method for preparing a liquid system according to claim 23,
characterised in that the solvation agent (S) has a boiling point of at least 200°C.

26. Method for preparing a liquid system according to any of claims 1 to 22,
characterised in that the solvation agent (S) is a mixture of at least one component with a high boiling point and at least one component with a low boiling point.

## Revendications

1. Procédé pour la préparation d'un système liquide à activité catalytique destiné à l'exécution de la polymérisation de lactame, qui est liquide et stable au stockage à la température ambiante, dans lequel, sous gaz inerte et à l'abri de l'humidité, dans au moins un agent de solvatation (S) liquide, polaire, aprotique, on prépare un produit de réaction exerçant simultanément l'action de catalyseur et d'activateur, par les étapes suivantes:
a) dissolution dans l'agent de solvatation (S) d'au moins un lactame (L) apte à la formation de lactame,
b) addition d'au moins une base forte (B) et conversion de l'au moins un lactame (L) en le lactamate,
c) addition d'au moins un activateur (A) et réaction de celui-ci avec le lactamate,
d) refroidissement de la solution du produit de réaction jusqu'à la température ambiante,
en utilisant le lactame (L) et la base (B) en proportions stoechiométriques ou avec un excès de lactame tel que moins de 400 parties en poids de lactame libre soient présentes par rapport au lactamate libre.

2. Procédé selon la revendication 1, caractérisé en ce que le lactame (L) et la base (B) sont utilisés en proportions stoechiométriques ou avec un excès de lactame d'au maximum 10 % en moles.

3. Procédé pour la préparation d'un système liquide selon la revendication 1 ou 2, caractérisé en ce que la au moins une base (B) et/ou le au moins un activateur (A) sont introduits dissous ou mis en suspension dans l'agent de solvatation ou un solvant ou un antioxydant.

4. Procédé pour la préparation d'un système liquide selon l'une des revendications 1 à 3, caractérisé en ce que le solvant et/ou l'agent de mise en suspension et/ou l'antioxydant pour la base (B) ainsi qu'éventuellement les produits de neutralisation de la base (B) sont éliminés sous l'effet d'un vide et d'apport de chaleur.

5. Procédé pour la préparation d'un système liquide selon l'une des revendications précédentes, caractérisé en ce que le produit de solvatation (S) est un composé choisi dans l'ensemble constitué par des polyols éthérifiés, des polyglycols estérifiés, des esters d'acide phtalique, des tétraalkylurées, des carboxamides N-alkylés ou des mélanges de ceux-ci.

6. Procédé pour la préparation d'un système liquide selon la revendication 5, caractérisé en ce que la tétraalkylurée est choisie parmi la tétraméthylurée, la tétraéthylurée, la tétrabutylurée, ou a une structure chimique selon la formule générale I, 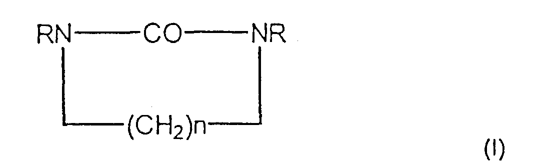 dans laquelle R est un radical alkyle, en particulier le groupe méthyle, et n = 2 ou 3.

7. Procédé pour la préparation d'un système liquide selon l'une des revendications précédentes, caractérisé en ce que le lactame (L) comporte un cycle à 5 - 13 chaînons.

8. Procédé pour la préparation d'un système liquide selon l'une des revendications précédentes, caractérisé en ce que le lactame (L) comporte un cycle à 5 - 7 chaînons.

9. Procédé pour la préparation d'un système liquide selon l'une des revendications précédentes, caractérisé en ce que le lactame (L) est le caprolactame.

10. Procédé pour la préparation d'un système liquide selon l'une des revendications précédentes, caractérisé en ce que le cation de la base (B) est un cation alcalin, alcalino-terreux ou tétraalkylammonium.

11. Procédé pour la préparation d'un système liquide selon l'une des revendications précédentes, caractérisé en ce que la base (B) est un alcoolate, un amide, un hydrure, un anion alkylé ou un composé de Grignard.

12. Procédé pour la préparation d'un système liquide selon l'une des revendications précédentes, caractérisé en ce que la base (B) est un éthylate alcalin ou alcalino-terreux ou un méthylate alcalin ou alcalino-terreux.

13. Procédé pour la préparation d'un système liquide selon l'une des revendications précédentes, caractérisé en ce que l'addition de la base (B) s'effectue sous forme de solution, suspension ou sous forme d'un solide finement divisé.

14. Procédé pour la préparation d'un système liquide selon l'une des revendications précédentes, caractérisé en ce que l'activateur (A) est au moins un composé choisi parmi un carbodiimide, un polycarbodiimide, un mono-isocyanate et un diisocyanate.

15. Procédé pour la préparation d'un système liquide selon l'une des revendications précédentes, caractérisé en ce que le mono- ou diisocyanate a une structure de base aliphatique, cycloaliphatique, aliphatique-aromatique ou aromatique.

16. Procédé pour la préparation d'un système liquide selon l'une des revendications précédentes, caractérisé en ce que la structure de base de l'isocyanate est celle du toluène, de l'isophorone, du xylène, du diphénylméthane, de l'hexane ou du cyclohexane.

17. Procédé pour la préparation d'un système liquide selon l'une des revendications précédentes, caractérisé en ce que les mono-isocyanates et diisocyanates sont bloqués avec des composés choisis dans le groupe du lactame et d'une hydroxy(alkyl gras)oxazoline.

18. Procédé pour la préparation d'un système liquide selon l'une des revendications précédentes, caractérisé en ce que le carbodiimide est choisi parmi le N,N'-dicyclohexylcarbodiimide, le N,N'-diisopropylcarbodiimide, le N,N'-di-(o-toluyl)carbodiimide, le 2,2',6,6'-tétraisopropyldiphénylcarbodiimide et le poly-(2,2'-diisopropyl)-p-phénylènecarbodiimide.

19. Procédé pour la préparation d'un système liquide selon l'une des revendications précédentes, caractérisé en ce que l'on utilise 0,4 à 1 mole d'activateur (A) par mole de lactamate.

20. Procédé pour la préparation d'un système liquide selon l'une des revendications précédentes, caractérisé en ce que le lactamate et l'activateur (A) sont utilisés dans le rapport stoechiométrique de leurs groupes fonctionnels.

21. Procédé pour la préparation d'un système liquide selon l'une des revendications précédentes, caractérisé en ce que, dans une étape quelconque du procédé, on ajoute des additifs choisis dans le groupe des agents de démoulage, antimousses, stabilisants, agents de nucléation, marqueurs, azurants optiques, plastifiants, agents antichoc et colorants.

22. Procédé pour la préparation d'un système liquide selon l'une des revendications précédentes, caractérisé en ce que les étapes de réaction individuelles se déroulent à des températures comprises entre 70 et 130°C.

23. Procédé pour la préparation d'un système liquide selon l'une des revendications précédentes, caractérisé en ce que l'agent de solvatation (S) a un point d'ébullition dans la plage de 80 à 330°C.

24. Procédé pour la préparation d'un système liquide selon la revendication 23, caractérisé en ce que l'agent de solvatation (S) a un point d'ébullition dans la plage de 80 à 160°C.

25. Procédé pour la préparation d'un système liquide selon la revendication 23, caractérisé en ce que l'agent de solvatation (S) a un point d'ébullition d'au moins 200°C.

26. Procédé pour la préparation d'un système liquide selon l'une des revendications 1 à 22, caractérisé en ce que l'agent de solvatation (S) est un mélange d'au moins un composant à haut point d'ébullition et d'au moins un composant à bas point d'ébullition.
